Europäisches Patentamt

European Patent Office

Office européen des brevets

(11) Publication number: **0 671 801 A2**

# EUROPEAN PATENT APPLICATION

(21) Application number: **95103489.1**

(22) Date of filing: **10.03.95**

(51) Int. Cl.6: **H02K 7/08**, H02K 9/06

(30) Priority: **11.03.94 JP 67893/94**
**03.02.95 JP 17239/95**

(43) Date of publication of application:
**13.09.95 Bulletin 95/37**

(84) Designated Contracting States:
**DE FR GB IT**

(71) Applicant: **NIPPONDENSO CO., LTD.**
**1-1, Showa-cho**
**Kariya-city**
**Aichi-pref., 448 (JP)**

(72) Inventor: **Ishida, Hiroshi**

1-19-9 Misono-cho
Anjyo-city,
Aichi-pref. 446 (JP)
Inventor: **Ishikawa, Hiroaki**
157 Yamane-cho,
Tenpaku-ku
Nogoya-city,
Aichi-pref. 468 (JP)

(74) Representative: **Tiedtke, Harro, Dipl.-Ing.**
**Patentanwaltsbüro**
**Tiedtke-Bühling-Kinne & Partner**
**Bavariaring 4**
**D-80336 München (DE)**

(54) Alternator for vehicle.

(57) A pulley-side bearing (10) is held by a boss portion (1a) which extends toward a space inside the pulley (3). The loading center of the pulley (3) placed at a prescribed distance from the loaded center of the pulley-side bearing (10) so that a counter pulley-side bearing (11) is biased to an inner surface of a boss portion (2a), thereby generating a frictional force against creeping of the counter pulley-side bearing (11). Specific grease including ether base lubricating oil is filled in the bearings (10, 11) so that a single row bearing (10) may be used as the pulley-side bearing (10) and creeping of the counter pulley-side bearing (11) may be prevented. $2\pi/3$ electric-angle-pitch multi phase windings and a counter pulley-side cooling fan (8') contribute to reduction in the axial dimension of the alternator.

FIG. 1

# FIG. 5B

## CROSS REFERENCE TO RELATED APPLICATION

The present application is based on and claims priority from Japanese Patent Applications No.Hei 6-67893 and No.Hei 7-17239 respectively filed on March 11, 1994 and February 3, 1995, the contents of which are incorporated herein by reference.

## BACKGROUND OF THE INVENTION

### 1. Field of the Invention

The present invention relates to an alternator for a vehicle.

### 2. Description of Related Art

Automotive accessories installed in a vehicle engine compartment have been reduced in size and weight in order to save space in the compartment and to reduce fuel consumption, and also to enhance acceleration response of the vehicle. For this purpose, a reduction in the size of the alternator has been attempted.

One of the conventional alternators attempting to meet the above requirement is disclosed in Japanese Patent Application Laid Open No. Hei 5-22897, and is shown in Fig. 6. The conventional alternator consists of a couple of housings 1 and 2, a pulley 3, a rotor 31, a stator 32 and a shaft 9. The rotor 31 has a pair of claw-shaped pole cores 6 and 6', a rotary shaft 9, a field coil 7 and a pair of cooling fans 8 and 8' disposed at end surfaces thereof. Outside diameters of the cooling fans 8 and 8' are smaller than the inside diameter of the stator 32. The shaft 9 is press-fitted into the rotor 31 and is rotatably carried by a double row bearing 10 (hereinafter referred to as a pulley-side bearing) disposed adjacent to the pulley 3 and a single row bearing 11 (hereinafter referred to as a counter pulley-side bearing) disposed at the opposite side of the pulley 3 . The stator 32 has stator windings 4 and a stator core 5 and is sandwiched by the housing 1 (hereinafter referred to as a pulley-side housing) adjacent to the pulley 3 and a housing 2 (hereinafter referred to as a counter pulley-side housing) on the opposite side of the pulley, and is disposed around the rotor 31 coaxially therewith.

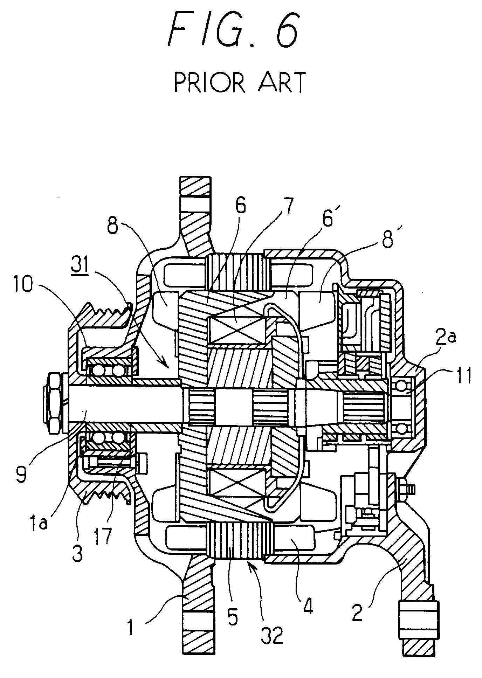

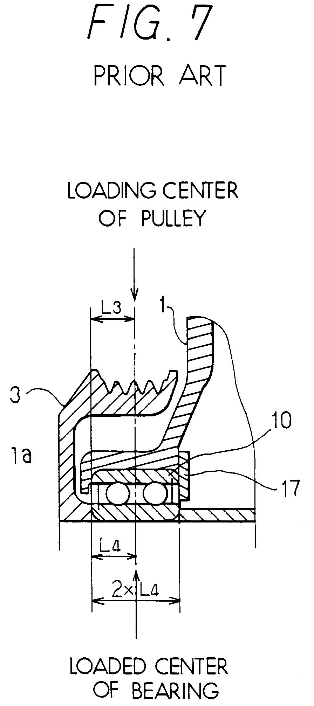

As shown in Fig. 7, a loading center L3 of the pulley 3 is positioned in alignment with a loaded center L4 of the double row bearing 10. The double row bearing 10 is press-fitted into a boss portion 1a which extends from the housing 1 toward the center of the pulley 3 and is retained by a retainer 17 and bolts 18 (shown in Fig. 6). The single row bearing 11 is held in a boss portion 2a of the counter pulley-side housing 2. It is clear in the above structure that since the loading center of the pulley 3 is in alignment with the loaded center of the double row bearing 10, durability of the double row bearing is maximized since no bending moment is applied thereon. It is also clear that since the double row bearing 10 is positioned inside the pulley, the axial size of the alternator is reduced.

Load applied on a bearing may be obtained from the following equations;

$$FA = FP \cdot L1/L2, \quad FB = FP\,(L1 + L2)\,/\,L2,$$ wherein

$FA$: load applied on the counter pulley-side bearing,

$FB$: load applied on the pulley-side bearing,

$FP$: load of the pulley,

$L1$: distance between loading center of the pulley and loaded center of the pulley-side bearing, and

$L2$: distance between loading center of the pulley and loaded center of the counter pulley-side bearing.

In the alternator for a vehicle as mentioned above and as disclosed in Japanese Patent Application Laid-Open No. Hei 5-22897, since the loading center of the pulley 3 is in alignment with the loaded center of the double row pulley-side bearing 10, the load applied on the single row counter pulley-side bearing 11 is nearly 0 (zero). However, a precession force caused by rotor unbalance at high rotational speeds may become greater than a load to be shared by the single row counter pulley-side bearing 11.

Usually, in a generator using materials of different thermal expansion coefficients such as aluminum, copper and resinous material, an outside diameter of the counter pulley-side bearing 11 is formed to fit into the boss portion 2a with a limited tolerance so that the bearing will not become locked due to an excessive compressive force generated between the bearing 11 and the boss portion 2a caused by thermal expansion during operation of the generator. Thus, when a circumferential force which is a component of the precession caused by a rotor unbalance becomes greater than the retaining force for the single row bearing 11 to carry in a low temperature range, an outer member of the single row bearing 11 may slip on the inner surface of the boss portion 2a (hereafter referred to as creeping) because of the limited tolerance, resulting in that the boss portion 2a and the bearing 11 may be worn out. Further, in order to position the pulley-side bearing 10 inside the pulley 3, the diameter of the bearing 10 is limited and, therefore, the axial length thereof is increased to carry the load applied by the pulley 3.

## SUMMARY OF THE INVENTION

The present invention is made in view of the foregoing problems and has a main object of providing an improved compact alternator having a specific positioning of a pulley-side bearing relative to a pulley.

Another object of the present invention is to provide an alternator having a counter pulley-side single row ball bearing which is free from creeping.

A further object of the present invention is to provide an improved alternator in which a loading center of the pulley and a loaded center of the pulley-side bearing are positioned at a prescribed distance and the pulley-side and counter pulley-side bearings are filled with specific grease which includes urea thickener and at least one of an organoantimony compound and an organomolybdenum compound. Since the loading center of the pulley and a loaded center of the pulley-side bearing are disposed at a prescribed distance from one another, the outer periphery of the counter pulley-side bearing is always biased to the inner surface of the boss portion at an appropriate retaining force so that the bearing is held by a friction force against the rotational force caused by the rotor unbalance without excessive compression force. Although the load applied by the pulley to the counter pulley-side bearing is increased, lubrication by the above mentioned grease forms a coating between surfaces of outer and inner members and balls of the bearing and reduces an excessive circumferential force causing the creeping. For this purpose, a single row bearing is used as the pulley-side bearing having relatively higher durability to the bending moment than the double row bearing, so that various commercial sizes are available and various pulleys may be designed according to variations of accessories installed in the engine compartment.

A still further object of the present invention is to provide an improved alternator which has $2\pi/3$ electric angle pitch multi-phase armature windings. Accordingly, portions of the windings projecting axially from a stator core may be reduced. Consequently, operation temperature of the alternator and the quantity of cooling air required for the stator may be reduced. Reduction in the operation temperature may also solve problems caused by the thermal expansion difference between the bearings and the housings. As a result, the rotor is secured more precisely to have a greater retaining force and creeping is prevented. Furthermore, since the required volume of the cooling air is reduced, the axial dimension of the cooling fan may be reduced.

## BRIEF DESCRIPTION OF THE DRAWINGS

Other objects, features, and characteristics of the present invention as well as the functions of related parts of the present invention will become clear from a study of the following detailed description, the appended claims and the drawings. In the drawings:

Fig. 1 is a cross-sectional side view illustrating an alternator for a vehicle according to a first embodiment of the invention;

Fig. 2 is a cross-sectional side view illustrating an alternator for a vehicle according to a second embodiment of the invention;

Fig. 3 is a cross-sectional side view illustrating an alternator for a vehicle according to a third embodiment of the invention;

Fig. 4A, Fig. 4B and Fig. 4C are graphs showing effects of the above shown embodiments;

Fig. 5A, 5B are schematic illustration of windings of a prior device and the third embodiment;

Fig. 6 is a cross-sectional side view illustrating a prior art device; and

Fig. 7 is a cross-sectional side view illustrating a main part of a bearing and a pulley of the prior art device.

## DETAILED DESCRIPTION OF THE PREFERRED EMBODIMENT

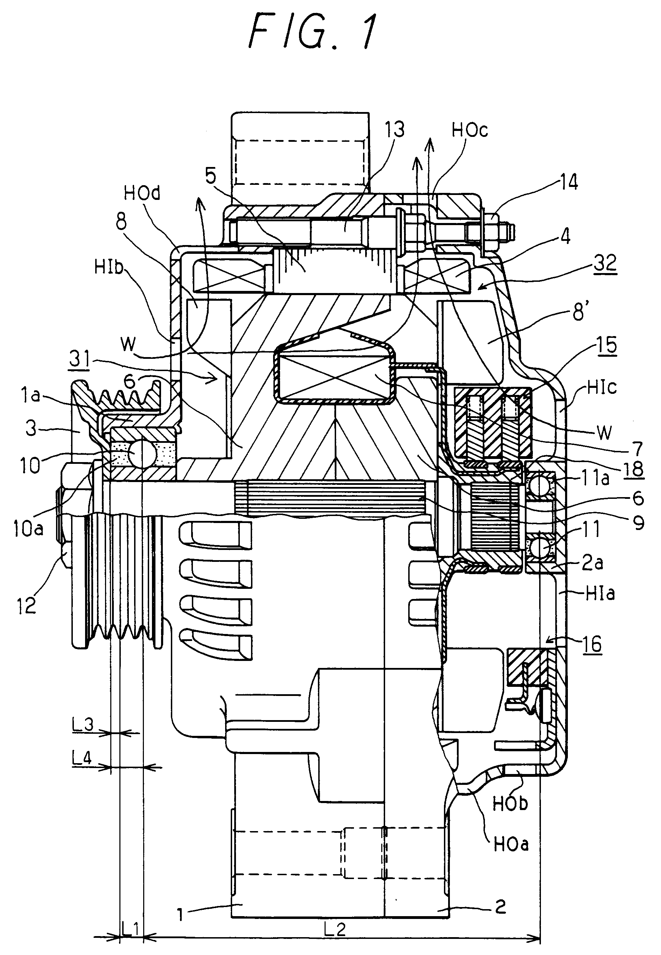

A first embodiment according to the present invention is described below, referring to Figs. 1 through 5.

In Fig. 1, a pair of aluminum-die-cast housings 1 and 2 respectively disposed at a side of a pulley 3 and the opposite side are secured to each other by stud bolts 13 and nuts 14. An air intake window HIb and an air outlet window HOd are formed in the pulley-side housing 1 and air intake windows HIa and HIc and air outlet windows HOa, HOb and HOc are formed in the counter pulley-side housing 2. A rotary shaft 9 is rotatably carried by a pulley-side single row ball bearing 10 and a counter pulley-side single row ball bearing 11 which are respectively press-fitted to boss portions 1a and 2a of the pulley-side housing 1 and the counter pulley-side housing 2. Open ends of the boss portions 1a and 2a are then squeezed or tamped down to hold the bearings 10 and 11. A proper quantity of grease 10a and 10b which includes ether base oil, urea thickener, organoantimony compound and organomolybdenum compound fills the interiors of the pulley-side bearing and the counter pulley-side bearing 11. A pole core 6 which has claw poles and cylindrical core portions and a slip ring 18 are press-fitted to the rotational shaft 9 and form a rotor 31 with a field coil 7. First and second cooling fans 8 and 8' are respectively welded to corresponding sides of the rotor 31. A stator core (armature core) 5 which has stator windings 4 is disposed inside the pulley-side housing 1 around the pole core 6, while a rectifying unit 16, brush unit 15, a regulator (not shown) and other electric parts are disposed in the counter pulley-side housing 2. The second cooling fan 8' is formed to have a inner space around the slip ring 18, and the brush unit 15 is held in that inner space. The rotary shaft 9 is press-fitted into inner members of the pulley-side bearing 10 and the counter pulley-side bearing 11. The pulley 3 has an interior recess to which the boss portion 1a extends axially from the pulley-side housing 1. The pulley 3 is tightly secured to the rotary shaft 9 by a pulley-lock nut 12 in such a manner that an inner end surface of the pulley 3 abuts an end of the inner member of the pulley-side bearing 10. The recess of the pulley 3 is formed to have a distance L3 between its bottom surface and a loading center of the pulley 3, which is L1 shorter than a distance L4 between the end of the inner member of the pulley side bearing 10 and a loaded center thereof. That is, the loading center of the pulley 3 is shifted to the left of the loaded center of the pulley-side bearing 10 by a distance L1, preferably, between 2 mm and 8 mm.

When an excessive circumferential force is generated at a high temperature, since the bearings 10 and 11 are lubricated by the grease including the ether base oil mentioned previously, the additive of the grease reacts directly on the surfaces and forms a coating to release the circumferential force. Thus, creeping between counter pulley-side bearing 11 and the boss portion 2a is prevented even though loading of the pulley-side bearing 10 increases.

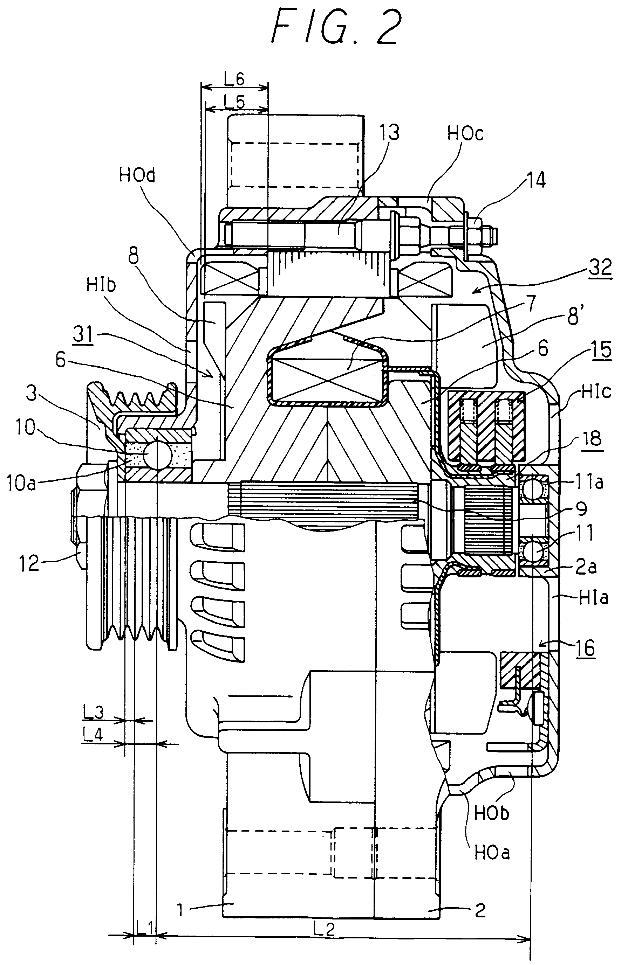

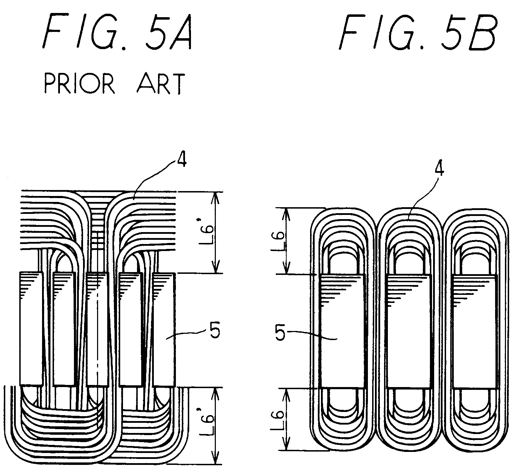

Fig. 2 is a cross-sectional view illustrating an alternator according to a second embodiment of the present invention, in which $2\pi/3$ electric-angle short-pitch multi-phase windings shown in Fig. 5 B are wound in place of the full pitch windings 32. The short pitch windings 4 are wound in a concentrated winding manner. Axial length L5 of the cooling fan 8 is smaller than axial length L6 of the stator windings 7.

Since the stator has the $2\pi/3$ short pitch windings 7, overlapping of the phase windings is eliminated and extension of the windings 4 from the stator core 5 is reduced. Thus the resistance of the windings is reduced and, consequently, heat generation in the stator core is reduced, so that temperature of the alternator in operation is lowered, and the requisite volume of the cooling air is reduced. Since the running temperature of the alternator is lowered, the counter pulley-side bearing 11 is press-fitted into the boss portion 2a more tightly, creeping may be prevented easily, and thermal deterioration of the grease filling in the bearings 10 and 11 is also prevented. Further, reduction of the requisite volume of the cooling air reduces the axial dimension of the cooling fan 8 which extends axially from the stator core.

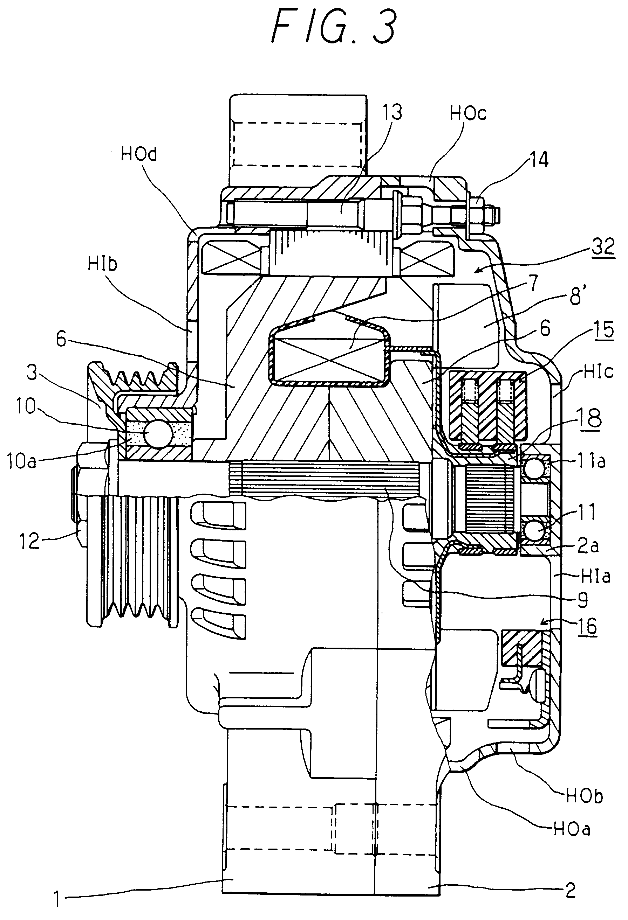

Fig. 3 is a cross-sectional view of an alternator according to a third embodiment of the present invention. The third embodiment is substantially the same in structure as the second embodiment except for no pulley-side cooling fan. Therefore, the number of parts used in this embodiment is reduced.

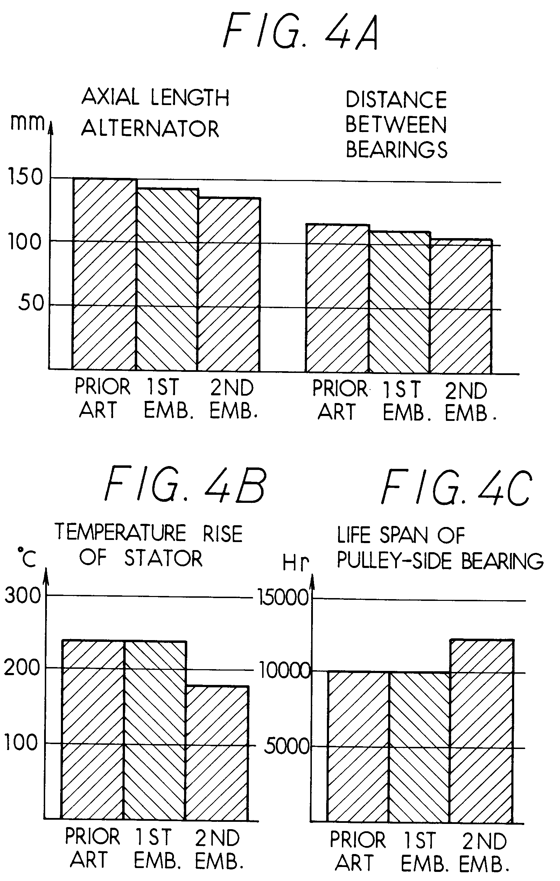

Figs. 4A, 4B and 4C are graphs explaining difference between the prior art and the above-stated first and second embodiments, in which Fig.4A shows axial length of the respective alternators and distance between the bearings of the alternators, Fig. 4B shows the temperature rise of the stators of the respective alternators, and Fig. 4C shows the life span of the pulley-side bearings of the respective alternators. That is, the bearings used in the first and the second embodiments have a life span equal to or longer than the prior art device as shown in Fig. 4C and the distance between the bearings and, consequently, the axial length of the alternator is reduced as shown in Fig. 4A. Particularly, the running temperature of the alternator in the second embodiment is also reduced.

Figs. 5A and 5B shows the effect of reducing the axial length of the $2\pi/3$ electric angle short-pitch multi-phase windings 4 of the embodiments 2 and 3. The $2\pi/3$ electric angle short-pitch multi phase windings 4 shown in Fig. 5B have no overlapping of the multi phase windings and the dimension L6 of the portion of the windings which extend axially from the stator core 5 is smaller than L6' as shown in Fig. 5A.

The pulley-side housing 1 and the counter pulley-side housing 2 made of die-cast aluminum may be replaced by units made of press-formed steel plate or machined metal block.

In the foregoing description of the present invention, the invention has been disclosed with reference to specific embodiments thereof. It will, however, be evident that various modifications and changes may be made to the specific embodiments of the present invention without departing from the broader spirit and scope of the invention as set forth in the appended claims. Accordingly, the description of the present invention in this document is to be regarded in an illustrative, rather than restrictive, sense.

A pulley-side bearing (10) is held by a boss portion (1a) which extends toward a space inside the pulley (3). The loading center of the pulley (3) placed at a prescribed distance from the loaded center of the pulley-side bearing (10) so that a counter pulley-side bearing (11) is biased to an inner surface of a boss portion (2a), thereby generating a frictional force against creeping of the counter pulley-side bearing (11). Specific grease including ether base lubricating oil is filled in the bearings (10, 11) so that a single row bearing (10) may be used as the pulley-side bearing (10) and creeping of the counter pulley-side bearing (11) may be prevented. $2\pi/3$ electric-angle-pitch multi phase windings and a counter pulley-side cooling fan (8') contribute to reduction in the axial dimension of the alternator.

**Claims**

1. An alternator for a vehicle comprising:
   a pulley (3) having a space formed inside thereof and a loading center to which a driving force is applied;
   a rotor (31) having claw poles (6) and a field coil (7);
   a rotary shaft (9) carrying said pulley (3) and said rotor (31) and driven through said pulley (3) by an engine;
   a housing member (1, 2) having a first boss portion (1a) extending toward said space and second boss portion (2a);
   a stator having an armature core (5) and multi-phase armature windings (4) disposed in said housing member (1, 2) around said rotor (31);
   a pulley-side bearing (10), carried by said first boss portion (1a) and having a loaded center to which belt tension is applied from said pulley (3), for carrying said rotary shaft (9) at a portion adjacent said pulley (3); said loaded center being positioned at a prescribed distance from said loading center of said pulley (3);
   a counter pulley-side bearing (11) carried by said second boss;
   a cooling fan (8') secured to the rotor (31) at a side opposite said pulley (3) ; and
   ether based lubricating grease filled in said pulley-side bearing (10) and said counter pulley-side bearing (11).

2. An alternator for a vehicle according to claim 1, wherein:
   said armature windings (4) comprises short pitch multi-phase windings having a pitch of $2\pi/3$ in electric angle.

3. An alternator for a vehicle according to claim 1, wherein:
   said prescribed distance from said loading center of said pulley (3) is a distance between 4 mm and 8 mm.

4. An alternator for a vehicle according to claim 1, wherein:
   said pulley-side bearing (11) is a single row bearing.

5. An alternator according to claim 1, wherein:
   said grease includes urea thickener and at least one of organoantimony compound and organomolybdenum compound.

6. An alternator according to one of claims 1, wherein: said housing member (1, 2) is made of a press-formed plate.

7. An alternator according to claim 1, wherein:
   said pulley-side bearing (10) is press-fitted to said boss portion (1a) and secured by squeezing said boss portion (1a).

8. An alternator for a vehicle comprising:
   a pulley (3) having a recess and a loading center to which a driving force is applied;
   a rotor (31) having claw poles (6), a field coil (7) and a slip ring (18);
   a rotary shaft (9) carrying said pulley (3) and said rotor (31);
   a housing member (1, 2) having a first boss portion (1a) extending toward said recess of said pulley (3), second boss portion (2a) opposite said pulley (3) and a brush unit (15) disposed in said housing member (1, 2) around said rotor (31);
   a stator having an armature core (5), multi-phase armature windings (4);
   a pulley-side bearing (10), carried by said first boss portion (1a) and having a loaded center to which belt tension is applied from said pulley (3), for carrying said rotary shaft (9) at a portion adjacent said pulley (3); said loaded center being positioned at a prescribed distance from said loading center of said pulley (3);
   a counter pulley-side bearing (11) carried by said second boss (2a);
   a cooling fan (8') secured to said rotor (31) at a side opposite said pulley (3), said cooling fan (8') having a space around said slip ring (18) where said brush unit (15) is disposed; and
   ether based lubricating grease filled in said pulley-side bearing (10) and said counter pulley-side bearing (11).

9. An alternator for a vehicle according to claim 8, wherein:
   said armature windings (4) comprises short pitch multi-phase windings having a pitch of $2\pi/3$ in electric angle.

**10.** An alternator for a vehicle according to claim 9, wherein:

said prescribed distance from said loading center of said pulley (3) is a distance between 4 mm and 8 mm.

**11.** An alternator for a vehicle according to claim 9, wherein:

said pulley-side bearing is a single row bearing.

**12.** An alternator according to claim 9, wherein:

said grease includes urea thickener and at least one of organoantimony compound and organomolybdenum compound.

**13.** An alternator according to one of claims 9, wherein: said housing member (1, 2) is made of a press-formed plate.

**14.** An alternator according to claim 9, wherein:

said pulley-side bearing (10) is press-fitted to said boss portion (1a) and secured by squeezing said boss portion (1a).

**15.** An alternator according to claim 9, comprising:

a second cooling fan (8) secured to said rotor (31) adjacent said pulley (3); axial end of said second cooling fan (8) disposed within axial end of said armature windings (4).

**16.** An alternator for a vehicle comprising:

a pulley (3) having a recess formed therein ;

a rotor (31) having claw poles (6) and a field coil (7);

a rotary shaft (9) carrying said pulley (3) and said rotor (31), said shaft (9) being driven through said pulley (3);

a housing member (1, 2) having a first boss portion (1a) proximate to and extending toward said space and a second boss portion (2a) opposite said first boss portion (1a);

a stator having an armature core (5) and $2\pi/3$ short pitch multi-phase armature windings disposed in said housing member (1, 2) around said rotor (31);

a pulley-side bearing (10) carried by said first boss portion (1a); a counter pulley-side bearing (11) carried by said second boss (2a); and

a cooling fan (8') secured to said rotor (31) at a side opposite said pulley (3).

**17.** The alternator according to claim 16, wherein a front surface of said rotor (31) is disposed close to a front bottom portion of said housing (1) without cooling fan (8).

**18.** The alternator according to claim 16 comprising a second cooling fan (8) secured to said rotor (31) opposite said cooling fan (8').

# FIG. 1

# FIG. 2

# FIG. 3

# FIG. 4A

AXIAL LENGTH ALTERNATOR (mm) — DISTANCE BETWEEN BEARINGS. Bar chart with values for PRIOR ART, 1ST EMB., 2ND EMB.

# FIG. 4B

TEMPERATURE RISE OF STATOR (°C). Bar chart with values for PRIOR ART, 1ST EMB., 2ND EMB.

# FIG. 4C

LIFE SPAN OF PULLEY-SIDE BEARING (Hr). Bar chart with values for PRIOR ART, 1ST EMB., 2ND EMB.

# FIG. 5A
## PRIOR ART

# FIG. 5B

# FIG. 6
## PRIOR ART

# *FIG. 7*

## PRIOR ART

LOADING CENTER
OF PULLEY

LOADED CENTER
OF BEARING